# EUROPEAN PATENT SPECIFICATION

(11) **EP 3 368 617 B1**
(45) Date of publication and mention of the grant of the patent: **04.03.2020**
(21) Application number: 16791157.7
(22) Date of filing: 13.10.2016
(51) Int. Cl.: C09D 7/00

(54) **SOLVENT-BASED REPELLENT COATING COMPOSITIONS AND COATED SUBSTRATES**
LÖSUNGSMITTELBASIERTE ABWEISENDE BESCHICHTUNGSZUSAMMENSETZUNGEN UND BESCHICHTETE SUBSTRATE
COMPOSITIONS DE REVÊTEMENT RÉPULSIVES À BASE DE SOLVANT ET SUBSTRATS REVÊTUS

(30) Priority: 28.10.2015 US 201562247240 P; 26.04.2016 US 201662327805 P
(43) Date of publication of application: 05.09.2018
(73) Proprietor: 3M Innovative Properties Company, St. Paul, MN 55133-3427 (US)
(72) Inventor: ELSBERND, Cheryl L.S., Saint Paul, Minnesota 55133-3427 (US); MEULER, Adam J., Saint Paul, Minnesota 55133-3427 (US); UNTIEDT, Nicholas L., Saint Paul, Minnesota 55133-3427 (US)
(74) Representative: Mathys & Squire
(86) International application number: PCT/US2016/056749
(87) International publication number: WO 2017/074709

(56) References cited:
- EP-A1- 2 607 397
- WO-A1-01/96654
- WO-A1-94/26830
- WO-A2-2005/113690
- US-A- 5 747 392

## Description

### Summary

The subject-matter of the present invention is defined in claims 1-15 as attached. The description discloses embodiments which do not fall under the claims. In one embodiment, a substrate is described comprising a surface layer comprising a fluorochemical material and a non-fluorinated polymeric binder.

In another embodiment, a coating composition is described comprising an organic solvent; a non-fluorinated polymeric binder; and a fluorochemical material.

In each of these embodiments, the fluorochemical material is preferably a compound having the formula:

(R_{f}-L-P)ₙA

R_{f} is a fluorinated group;
L is independently an organic divalent linking group;
P is a catenary, divalent heteroatom-containing carbonyl moiety, such as -C(O)O-;
A is hydrocarbon moiety;
and n typically ranges from 1 to 3.

In another embodiment, a method of making a coated article is described comprising providing a substrate; coating the substrate with a coating composition as described herein; and removing the organic solvent.

### Brief Description of the Drawings

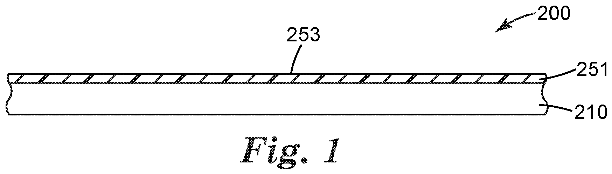

FIG. 1 is cross-sectional view of an embodied substrate comprising a repellent surface layer.

### Detailed Description

With reference to Fig. 1, article 200 comprises substrate 210 comprising a liquid repellent surface layer 251 that comprises a (e.g. non-fluorinated) organic polymeric binder and a fluorochemical material. The concentration of fluorochemical material at the outer exposed surface 253 is typically higher than the concentration of fluorochemical material within the (e.g. non-fluorinated) organic polymeric binder layer 251 proximate substrate 210. The liquid repellent surface layer can be provided by coating substrate 210 with a coating composition comprising an organic solvent, a (e.g. non-fluorinated) organic polymeric binder, and a fluorochemical material; as will subsequently be described.

The outer exposed surface 253 is preferably liquid repellent such that the advancing and/or receding contact angle of the surface with water is least 90, 95, 100, 105, 110, or 115 degrees. The advancing and/or receding contact angle is typically no greater than 135, 134, 133, 132, 131 or 130 degrees and in some embodiments, no greater than 129, 128, 127, 126, 125, 124, 123, 122, 121, or 120 degrees. The difference between the advancing and/or receding contact angle with water of the liquid repellent surface layer can be at least 5, 10, 15, 20, 25, 30, 35, 40, 45, or 50 degrees. In some embodiments, the difference between the advancing and/or receding contact angle with water of the surface layer is no greater than 15, 14, 13, 12, 11, 10, 9, 8, 7, 6, 5, 4, 3, 2, or 1 degree. As the difference between the advancing and/or receding contact angle with water increases, the tilt angle needed to slide or roll off a (e.g. water) droplet from a planar surface increases. One of ordinary skill appreciates that deionized water is utilized when determining contact angles with water.

In some embodiments, the outer exposed surface 253 exhibits a contact angle in the ranges just described after soaking in water for 24 hours at room temperature (25°C). The contact angle of the liquid repellent surface can also be evaluated with other liquids instead of water such as hexadecane or a solution of 10% by weight 2-n-butoxyethanol and 90% by weight deionized water.

In some embodiments, the advancing contact angle with such 2-n-butoxyethanol solution is at least 60, 61, 62, 63, 64, 65, 66, 67, 68, 69, 70 degrees and in some embodiments at least 75 or 80 degrees. In some embodiments, the receding contact angle with such 2-n-butoxyethanol solution is at least 40, 45, 50, 55, 60, 65, or 70 degrees. In some embodiments, the advancing and/or receding contact angle of the liquid repellent surface with such 2-n-butoxyethanol solution is no greater than 100, 95, 90, 85, 80, or 75 degrees.

In another embodiment, the outer exposed surface 253 is preferably liquid repellent such that the receding contact angle of the surface with hexadecane is at least 45, 46, 47, 48, 49, 50, 55, 60, 65, 70, or 75 degrees. The advancing contact angle with hexadecane is typically at least 45, 50, 55, 60, 65, 70, 75, 80, or 84 degrees. In typical embodiments, the receding or advancing contact angle with hexadecane is no greater than 85 or 80 degrees. In some embodiments, the outer exposed surface 253 exhibits a contact angle in the ranges just described after soaking in water for 24 hours at room temperature (25°C).

The surface layer is not a lubricant impregnated surface. Rather the outer exposed surface is predominantly a solid liquid-repellent material. In this embodiment, less than 50, 45, 40, 35, 30, 25, 20, 15, 10, 5, 4, 3, 2, 1, 0.5, 0.1, 0.005, 0.001% of the surface area is a liquid lubricant. Rather, at least 50, 55, 60, 65, 70, 75, 80, 85, 90, 95, 96, 97, 98, 99, 99.5%, or greater of the outer exposed surface is a solid liquid-repellent material, as described herein. Thus, a liquid (e.g. water, oil, paint) that is being repelled comes in contact with and is repelled by the solid liquid-repellent material.

The repellent material is generally a solid at the use temperature of the coated substrate or article, which can be as low as -60°F (-51.1°C) or -80°F (-62.2°C), yet more typically ranges from -40°F (-40°C) to 120°F (48.9°C). For outdoor usage in moderate climates, the typical use temperature may be at least-20°F (-28.9°C), -10°F (-23.3°C), 0°F (-17.8°C), or 10°F (-12.2°C). In typical embodiments, the repellent material is a solid at room temperature (e.g. 25°C) and temperatures ranging from 40°F (4.44°C) to 130°F (54.4°C). In typical embodiments the repellent material has a melting temperature (peak endotherm as measured by DSC) of greater than 25°C and also typically greater than 130°F (54.4°C). In some embodiments, the repellent material has a melting temperature no greater than 200°C. In typical embodiments, a single solid repellent material is utilized. However, the coating composition may contain a mixture of solid repellent materials.

The repellent material has no solubility or only trace solubility with water, e.g., a solubility of 0.01 g/l or 0.001 g/l or less.

The liquid-repellent surface layer comprises a fluorochemical material and a (e.g. non-fluorinated) organic polymeric binder. In typical embodiments, a major amount of non-fluorinated polymeric binder is combined with a sufficient amount of fluorochemical material that provides the desired liquid repellency properties, as previously described.

In typical embodiments, the amount of fluorochemical material is least about 0.005, 0.10, 0.25, 0.5, 1.5, 2.0, or 2.5 wt.-% and in some embodiments, at least about 3.0, 3.5, 4.0, 4.5, or 5 wt.-%. The amount of fluorochemical material is typically no greater than 50, 45, 40, 35, 30, 25, 20, or 15 wt.-% of the sum of the fluorochemical material and (e.g., non-fluorinated) polymeric binder. Thus, the fluorine content of such fluorochemical material-containing polymeric (e.g. binder) materials is significantly less than the fluorine content of fluoropolymers, such as Teflon™ PTFE. The Teflon™ PTFE materials are polytetrafluoroethylene polymers prepared by the polymerization of the monomer tetrafluoroethylene ("TFE" having the structure CF₂=CF₂). It has been found that Teflon™ PTFE does not provide a liquid repellent surface such that the receding contact angle with water is at least 90 degrees and/or difference between the advancing contact angle and the receding contact angle of water is less than 10. Further, Teflon™ PTFE also does not provide an (e.g. aqueous) paint repellent surface as described in WO2016/069674. It is therefore a surprising result that materials containing such low fluorine content can provide better liquid repellency than fluoropolymers such as Teflon™ PTFE having a substantially higher fluorine content.

In some embodiments, the fluorochemical material comprises a compound or a mixture of compounds represented by the formula:

**(R_{f}-L-P)ₙA**

R_{f} is a fluorinated group;
L is independently an organic divalent linking group;
P is independently a catenary, divalent heteroatom-containing a carbonyl moiety;
A is hydrocarbon moiety;
and n typically ranges from 1 to 3.

In some embodiments, n is preferably 2 or averages 2. When the fluorochemical material comprises a mixture of compounds, the concentration by weight of the fluorochemical compound wherein n is 2 is typically greater than each of the fractions wherein n is not 2 (e.g. n=1 or n=3). Further, the concentration wherein n is 2 is typically at least 50%, 55%, 60%, 65%, 70%, 75%, 80%, 85%, 90%, or 95% by weight or greater of the mixture of compounds.

The fluorinated group, R_{f}, is typically a fluoroalkyl group that contains at least 3 or 4 carbon atoms and typically no greater than 12, 8, or 6 carbon atoms. The fluoroalkyl group can be straight chain, branched chain, cyclic or combinations thereof. In typical embodiments, the fluoroalkyl group is preferably free of olefinic unsaturation. In some embodiments, each terminal fluorinated group contains at least 50, 55, 60, 65, or 70% to 78% fluorine by weight. Such terminal groups are typically perfluorinated. In some embodiments, R_{f} is CF₃(CF₂)₃- or in other words C₄F₉- for at least 50%, 55%, 60%, 65%, 70%, 75%, 80%, 85%, 90%, or 95% by weight or greater of the mixture of compounds. In another embodiment, the fluorinated group, R_{f}, is a perfluoroheteroalkyl group, such as a perfluoroether or perfluoropolyether.

The organic divalent linking group, L, can be a covalent bond, a heteroatom (e.g., O or S), or an organic moiety. The organic divalent linking group typically contains no greater than 20 carbon atoms, and optionally contains oxygen-, nitrogen-, or sulfur-containing groups or a combination thereof. L is typically free of active hydrogen atoms. Examples of L moieties include straight chain, branched chain, or cyclic alkylene, arylene, aralkylene, oxy, thio, sulfonyl, amide, and combinations thereof such as sulfonamidoalkylene. Below is a representative list of suitable organic divalent linking groups.

-SO₂N(R')(CH₂)ₖ-

-CON(R')(CH₂)ₖ-

-(CH₂)ₖ-

-(CH₂)ₖO(CH₂)ₖ-

-(CH₂)ₖS(CH₂)ₖ-

-(CH₂)ₖSO₂(CH₂)ₖ-

-(CH₂)ₖOC(O)NH-

-(CH₂)SO₂N(R')(CH₂)ₖ-

-(CH₂)ₖNR'-

-(CH₂)ₖNR'C(O)NH-

For the purpose of this list, each k is independently an integer from 1 to 12. R' is hydrogen, phenyl, or an alkyl of 1 to about 4 carbon atoms (and is preferably methyl). In some embodiments, k is no greater than 6, 5, 4, 3, or 2. In some embodiments, the linking group has a molecular weight of at least 14 g/mole, in the case of -CH₂-, or at least 20, 25, 30, 40, 50, 60, 70, 80, 90, 100, or 110 g/mole. The molecular weight of the linking group is typically no greater than 350 g/mole and in some embodiments no greater than 300, 250, 200, or 150 g/mole.

The aforementioned moiety, A, can be a straight chain, branched chain, or cyclic hydrocarbon moiety, or a combination thereof. Typical A moieties include alkylene, alkene, arylene, and aralkylene having 4-50 carbon atoms. In some embodiments, A is preferably a saturated hydrocarbon moiety or in other words an alkylene group (i.e. when n is 2 or 3) or alkyl group (i.e. when n is 1) averaging at least 4, 6, 8, 10, 12, 14, 16, or 18 carbon atoms. In some embodiments, the alkylene or alkyl group averages no greater than 45, 40, 35, 30, 25, or 20 carbon atoms. In typical embodiments, A is a hydrocarbon portion of a dicarboxylic acid or fatty acid.

The divalent carbonyl moiety, P, is typically a residue of a dicarboxylic or fatty acid and thus carbonyloxy (-C(O)O-) or in other words an ester group.

The fluorochemical compound can be prepared by various methods known in the art such as described in US 6171983. The fluorochemical is most typically prepared by esterifying a fluorinated alcohol with a dicarboxylic acid or a fatty acid. Particularly when a fatty acid is utilized as a starting material the resulting fluorochemical material typically contains a mixture of compounds.

Suitable dicarboxylic acids include adipic acid, suberic acid, azelaic acid, dodecanedioic acid, octadecanedioic acid, eicosanedioic acid, and the like that provide the A group as previously described. Derivatives of dicarboxylic acid can also be employed such as halides and anhydrides.

Suitable unsaturated fatty acids include for example palmitoleic acid, linoleic acid, linolenic acid, oleic acid, rinoleic acid, gadoleic acid, eracic acid or mixtures thereof. Polymerized fatty acids can contain a higher number of carbon atoms such that the fluorochemical compound averages 30, 35, 40, 45 or 50 carbon atoms.

Suitable saturated fatty acids include caprylic acid, CH₃(CH₂)₆COOH; capric acid, CH₃(CH₂)₈COOH; lauric acid, CH₃(CH₂)₁₀COOH; myristic acid, CH₃(CH₂)₁₂COOH; palmitic CH₃(CH₂)₁₄COOH; stearic acid CH₃(CH₂)₁₆COOH; arachidic acid, CH₃(CH₂)₁₈COOH; behenic acid CH₃(CH₂)₂₀COOH; lignoceric acid, CH₃(CH₂)₂₂COOH; and cerotic acid CH₃(CH₂)_{24.}COOH.

Representative examples of useful fluorine-containing monoalcohols include the following wherein R_{f} is a fluorinated group as previously described.

| | |
|---|---|
| R_{f}SO₂N(CH₃)CH₂CH₂OH, | CF₃ (CF₂)₃ SO₂N(CH₃)CH₂CH₂OH, |
| CF₃(CF₂)₃SO₂N(CH₃)CH(CH₃)CH₂OH, | CF₃(CF₂)₃SO₂N(CH₃)CH₂CH(CH₃)OH, |
| C₃F₇CH₂OH, | R_{f}SO₂N(H)(CH₂)₂OH, |
| R_{f}SO₂N(CH₃)(CH₂)₄OH, | C₄F₉SO₂N(CH₃)(CH₂)₄OH |
| C₆F₁₃SO₂N(CH₃)(CH₂)₄OH, | R_{f}SO₂N(CH₃)(CH₂)₁₁OH, |
| R_{f}SO₂N(C₂H₅)CH₂CH₂OH, | CF₃(CF₂)₃SO₂N(C₂H₅)CH₂CH₂OH, |
| C₆F₁₃SO₂N(C₂H₅)CH₂CH₂OH | R_{f}SO₂N(C₂H₅)(CH₂)₆OH, |
| C₃F₇CONHCH₂CH₂OH, | R_{f}SO₂N(C₃H₇)CH₂OCH₂CH₂CH₂OH, |
| R_{f}SO₂N(CH₂CH₂CH₃)CH₂CH₂OH, | R_{f}SO₂N(C₄H₉)(CH₂)₄OH, |
| R_{f}SO₂N(C₄H₉)CH₂CH₂OH, | |

Other fluorine-containing monoalcohols are described in US 6586522; incorporated herein by reference.

In some embodiments, the monofunctional fluoroaliphatic alcohols useful in preparing the fluorochemical compounds include the N-alkanol perfluoroalkylsulfonamides described in U.S. Pat. No. 2,803,656 (Ahlbrecht et al.), which have the general formula R_{f}SO₂N(R)R₁CH₂ OH wherein R_{f} is a perfluoroalkyl group having 3 to 6 and preferably 4 carbon atoms, R₁ is an alkylene radical having 1 to 12 carbon atoms, and R is a hydrogen atom or an alkyl group containing 1 to 4 carbon atoms and is preferably methyl. In some embodiments, R₁ is an alkylene radical having no greater than 8, 7, 6, 5, 4, 3, or 2 carbon atoms. These monofunctional alcohols can be prepared by reactions of an acetate ester of halohydrin with a sodium or potassium salt of the corresponding perfluoroalkylsulfonamide.

In some embodiments, the fluorochemical compound has the following formulas

C₄F₉SO₂N(CH₃)(CH₂)ₖOC(O)-A-C(O)O(CH₂)ₖN(CH₃)SO₂C₄F₉

or

C₄F₉SO₂N(CH₃)(CH₂)ₖOC(O)-A

wherein k and A are the same as previously described.

In some typical embodiments, the fluorochemical compound comprises less than 2% of fluorinated groups having greater than 6 carbon atoms. Further, the fluorochemical compound typically comprises less than 25% of fluorinated groups having greater than 4 carbon atoms. In favored embodiments, the fluorochemical compound is free of fluorinated (e.g. fluoroalkyl) groups, R_{f}, having at least 8 carbon atoms. In some embodiments, the fluorochemical compound is free of fluorinated (e.g. fluoroalkyl) groups, R_{f}, having at least 5, 6, or 7 carbon atoms. In some embodiments, the repellent surface or repellent coating is free of fluorinated (e.g. fluoroalkyl) groups, R_{f}, having at least 8 carbon atoms. In some embodiments, the repellent surface or repellent coating is free of fluorinated (e.g. fluoroalkyl) groups, R_{f}, having at least 5, 6, or 7 carbon atoms.

Fluorochemical compounds according to the formulas described herein are not fluoroalkyl silisesquioxane materials having the chemical formula [RSiO_{3/2}]ₙ, wherein R comprises a fluoroalkyl or other fluorinated organic group. Fluorochemical compounds according to the formulas described herein are also not (e.g. vinyl terminated) polydimethylsiloxanes. In typical embodiments, the fluorochemical material is free of silicone atom as well as siloxane linkages.

In some embodiments, the (e.g. starting materials of the fluorochemical compound are selected such that the) fluorochemical compound has a molecular weight (Mw) no greater than 1500, 1400, 1300, 1200, 1100, or 1000 g/mole. In some embodiments the molecular weight is at least 250, 300, 350, 400, 450, 500, 550, 600, or 700 g/mole.

In some embodiments, the (e.g. starting materials of the fluorochemical compound are selected such that the) fluorochemical compound has a fluorine content of at least 25 wt.-%. In some embodiments, the fluorine content of the fluorochemical material is at least 26, 27, 28, 29, 30, 31, 32, 33, or 34 wt.-% and typically no greater than 58, 57, 56, 55, 54, 53, 52, 51, or 50 wt.-%.

Various organic polymeric binders can be utilized. Although fluorinated organic polymeric binders can also be utilized, fluorinated organic polymeric binders are typically considerably more expensive than non-fluorinated binders. Further, non-fluorinated organic polymeric binders can exhibit better adhesion to non-fluorinated polymeric, metal, or other substrates.

Suitable non-fluorinated binders include for example polystyrene, atactic polystyrene, acrylic (i.e. poly(meth)acrylate), polyester, polyurethane (including polyester type thermoplastic polyurethanes "TPU"), polyolefin (e.g. polyethylene), and polyvinyl chloride. Many of the polymeric materials that a substrate can be thermally processed from, as will subsequently be described, can be used as the non-fluorinated organic polymeric binder of the organic solvent coating composition. However, in typical embodiments, the non-fluorinated organic polymeric binder is a different material than the polymeric material of the substrate. In some embodiments, the organic polymeric binder typically has a receding contact angle with water of less than 90, 80, or 70 degrees. Thus, the binder is typically not a silicone material.

In some embodiments, the (e.g. non-fluorinated) organic polymeric binder is a film-grade resin, having a relatively high molecular weight. Film-grade resins can be more durable and less soluble in the liquid (e.g. water, oil, paint) being repelled. In other embodiments, the (e.g. non-fluorinated) organic polymeric binder can be a lower molecular weight film-forming resin. Film-forming resins can be more compliant and less likely to affect the mechanical properties of the substrate. Viscosity and melt flow index are indicative of the molecular weight. Mixtures of (e.g. non-fluorinated) organic polymeric binders can also be used.

In some embodiments, the film-grade (e.g. non-fluorinated) organic polymeric binder typically has a melt flow index of at least 1, 1.5, 2, 2.5, 3, 4, or 5 g/10 min at 200°C/5kg ranging up to 20, 25, or 30 g/10 min at 200°C/5kg. The melt flow index can be determined according to ASTM D-1238. The tensile strength of the (e.g. non-fluorinated) organic polymeric binder is typically at least 40, 45, 50, 55, or 60 MPa. Further, the (e.g. non-fluorinated) organic polymeric binder can have a low elongation at break of less than 10% or 5%. The tensile and elongation properties can be measured according to ASTM D-638.

In other embodiments, the (e.g. non-fluorinated) organic polymeric binders have a lower molecular weight and lower tensile strength than film-grade polymers. In one embodiment, the melt viscosity of the (e.g. non-fluorinated) organic polymeric binders (as measured by ASTM D-1084-88) at 400°F (204°C) ranges from about 50,000 to 100,000 cps. In another embodiment, the molecular weight (Mw) of the (e.g. non-fluorinated) organic polymeric binder is typically at least about 1000, 2000, 3000, 4000, or 5000 g/mole ranging up to 10,000; 25,000; 50,000; 75,000; 100,000; 200,000; 300,000; 400,000, or 500,000 g/mole. In some embodiments, the (e.g. non-fluorinated) organic polymeric binder has a tensile strength of at least 5, 10, or 15 MPa ranging up to 25, 30, or 35 MPa. In other embodiments, the (e.g. non-fluorinated) organic polymeric binder has a tensile strength of at least 40, 45, or 50 MPa ranging up to 75 or 100 MPa. In some embodiments, the (e.g. non-fluorinated) organic polymeric binder has an elongation at break ranging up to 25, 50, 100, 200, 300, 400, 500, 600, 700, 800, 900, 1000% or higher[AM1]. In some embodiments, the (e.g. non-fluorinated) organic polymeric binder has a Shore A hardness of at least 50, 60, 70, or 80 ranging up to 100.

In some embodiments, the (e.g. non-fluorinated) organic polymeric binder is selected such that it is compliant at the use temperature of the coated substrate or article. In this embodiment, the (e.g. non-fluorinated) organic polymeric binder has a glass transition temperature (Tg) as can be measured by DSC of less than 0°C or 32°F. In some embodiments, the (e.g. non-fluorinated) organic polymeric binder has a glass transition temperature (Tg) of less than 20°F (-6.7°C), 10°F (-12.2°C), 0°F (-17.8°C), -10°F (-23.3°C), -20°F (-28.9°C), -30°F (-34.4°C), -40°F (-40°C), -50°F (-45.6°C), -60°F (-51.1°C), -70°F (-56.7°C), or -80°F (-62.2°C). The (Tg) of many (e.g. non-fluorinated) organic polymeric binders is at least -130°C.

The selection of (e.g. non-fluorinated) organic polymeric binder contributes to the durability of the repellent surface.

In typical embodiments, the non-fluorinated organic polymeric binder does not form a chemical (e.g. covalent) bond with the fluorochemical material as this may hinder the migration of the fluorochemical material to the outermost surface layer.

In some embodiments, the (e.g. non-fluorinated) organic polymeric binder is not curable, such as in the case of alkyd resins. An alkyd resin is a polyester modified by the addition of fatty acids and other components, derived from polyols and a dicarboxylic acid or carboxylic acid anhydride. Alkyds are the most common resin or "binder" of most commercial "oil-based" paints and coatings.

In some embodiments, the selection of the non-fluorinated polymeric binder can affect the concentration of fluorochemical material that provides the desired liquid repellency properties. For example when the binder is atactic polystyrene, having a molecular weight of 800-5000 kg/mole, or polystyrene available under the trade designation "Styron 685D", the concentration of fluorochemical material was found to exceed 2.5 wt.-% in order to obtain the desired liquid repellency properties. Thus, for some non-fluorinated polymeric binders, the concentration of fluorochemical material may be at least 3, 3.5, 4, or 5 wt.-% of the total amount of fluorochemical material and (e.g. non-fluorinated) polymeric binder.

Further, when the binder is PMMA, i.e. polymethylmethacrylate (available from Alfa Aesar) 50 wt.-% of fluorochemical material resulted in a receding contact angle with water of 86 degrees. However, lower concentrations of fluorochemical material resulted in a receding contact angle with water of greater than 90 degrees. Thus, for some non-fluorinated polymeric binders, the concentration of fluorochemical material may be less than 50 wt.-% of the total amount of fluorochemical material and (e.g. non-fluorinated) polymeric binder.
The compositions comprising a fluorochemical material and a (e.g., non-fluorinated organic) polymeric binder can be dissolved, suspended, or dispersed in a variety of organic solvents to form a coating composition suitable for use in coating the compositions onto a substrate. The organic solvent coating compositions typically contain at least about 90%, 91%, 92%, 93%, 94%, 95%, 96%, 97%, 98%, 99% organic solvent or greater, based on the total weight of the coating composition. The coating compositions typically contain at least about 0.01%, 0.1%, 0.5%, 1%, 2%, 3%, 4%, 5%, 6%, 7%, 8%, 9%, 10%, 15% or greater solids of the (e.g. non-fluorinated organic) polymeric binder and fluorochemical material, based on the total weight of the coating composition. However, the coating composition can be provided with an even higher amount of solids, e.g. 20, 30, 40, or 50 wt.-% solids that may optionally be subsequently diluted. Suitable organic solvents include for example alcohols, esters, glycol ethers, amides, ketones, hydrocarbons, chlorohydrocarbons, hydrofluorocarbons, hydrofluoroethers, chlorocarbons, and mixtures thereof. In some embodiments, the organic solvent is non-fluorinated.

The coating composition may contain one or more additives provided the inclusion of such does not detract from the liquid repellent properties.

The coating compositions can be applied to a substrate or article by standard methods such as, for example, spraying, padding, dipping, roll coating, brushing, or exhaustion (optionally followed by the drying of the treated substrate to remove any remaining water or organic solvent). The substrate can be in the form of sheet articles that can be subsequently thermally formed into a substrate or component. When coating flat substrates of appropriate size, knife-coating or bar-coating may be used to ensure uniform coating of the substrate.

The moisture content of the organic coating composition is preferably less than 1000, 500, 250, 100, 50 ppm. In some embodiments, the coating composition is applied to the substrate at a low relative humidity, e.g. of less than 40%, 30% or 20% at 25°C.

The coating compositions can be applied in an amount sufficient to achieve the desired repellency properties. Coatings as thin as 250, 300, 350, 400, 450, or 500 nm ranging up to 1, 1.5, 2, 2.5, 3, 3.5, 4, 4.5, or 5 microns can provide the desired repellency. However, thicker coatings (e.g., up to about 10, 15, 20 microns or more) can also be used. Thicker coatings can be obtained by applying to the substrate a single thicker layer of a coating composition that contains a relatively high solids concentration. Thicker coatings can also be obtained by applying successive layers to the substrate.

The liquid repellent coating composition can be coated on a wide variety of organic or inorganic substrates.

Suitable polymeric materials for substrates include, but are not limited to, polyesters (e.g., polyethylene terephthalate or polybutylene terephthalate), polycarbonates, acrylonitrile butadiene styrene (ABS) copolymers, poly(meth)acrylates (e.g., polymethylmethacrylate, or copolymers of various (meth)acrylates), polystyrenes, polysulfones, polyether sulfones, epoxy polymers (e.g., homopolymers or epoxy addition polymers with polydiamines or polydithiols), polyolefins (e.g., polyethylene and copolymers thereof or polypropylene and copolymers thereof), polyvinyl chlorides, polyurethanes, fluorinated polymers, cellulosic materials, derivatives thereof, and the like. In some embodiments, where increased transmissivity is desired, the polymeric substrate can be transparent. The term "transparent" means transmitting at least 85 percent, at least 90 percent, or at least 95 percent of incident light in the visible spectrum (wavelengths in the range of 400 to 700 nanometers). Transparent substrates may be colored or colorless.

Suitable inorganic substrates include metals and siliceous materials such as glass. Suitable metals include pure metals, metal alloys, metal oxides, and other metal compounds. Examples of metals include, but are not limited to, chromium, iron, aluminum, silver, gold, copper, nickel, zinc, cobalt, tin, steel (e.g., stainless steel or carbon steel), brass, oxides thereof, alloys thereof, and mixtures thereof.

The coating composition can be used to impart or enhance (e.g. aqueous and/or oil) liquid repellency of a variety of substrates.

The term "aqueous" means a liquid medium that contains at least 50, 55, 60, 65, or 70 wt-% of water. The liquid medium may contain a higher amount of water such as at least 75, 80, 85, 90, 95, 96, 97, 98, 99, or 100 wt-% water. The liquid medium may comprise a mixture of water and one or more water-soluble organic cosolvent(s), in amounts such that the aqueous liquid medium forms a single phase. Examples of water-soluble organic cosolvents include for example methanol, ethanol, isopropanol, 2-methoxyethanol, (2-methoxymethylethoxy)propanol, 3-methoxypropanol, 1-methoxy-2-propanol, 2-butoxyethanol, ethylene glycol, ethylene glycol mono-2-ethylhexylether, tetrahydrofuran, 2,2,4-trimethyl-1,3-pentanediol monoisobutyrate, tetraethylene glycol di(2-ethylhexoate), 2-ethylhexylbenzoate, and ketone or ester solvents. The amount of organic cosolvent does not exceed 50 wt-% of the total liquids of the coating composition. In some embodiments, the amount of organic cosolvent does not exceed 45, 40, 35, 30, 25, 20, 15, 10 or 5 wt-% organic cosolvent. Thus, the term aqueous includes (e.g. distilled) water as well as water-based solutions and dispersions such as paint. Water-based solutions and dispersions may be used as test liquids for evaluating contact angles.

In some embodiments, the coating composition described herein can impart paint repellency as described in WO2016/069674.

The aqueous liquid medium (e.g. paint) may comprise relatively small concentrations of volatile organic solvents. In some embodiments, the volatile organic content (VOC) of the repelled aqueous liquid is greater than 5, 6, 7, 8, 9, or 10 grams/liter and may be greater than 15, 20, 25 grams/liter. In some embodiments, the volatile organic content (VOC) of the repelled aqueous liquid is typically no greater than 250 grams/liter and in some embodiments no greater than 200 grams/liter, 150 grams/liter, 100 grams/liter, or 50 grams/liter. In other embodiments, the VOC content of the repelled aqueous liquid may be higher, ranging from at least 275, 300, or 325 grams/liter up to 500 grams/liter. In some embodiments, the VOC content of the repelled aqueous liquid is no greater than 450 or 425 grams/liter. As used herein, VOC is any organic compound having a boiling point less than or equal to 250°C measured at standard atmospheric pressure of 101.3 kPa.

The aqueous liquid medium (e.g. paint) may comprise water-soluble organic solvents such as alcohols (e.g. alkylene glycol alkyl ether). For example, the aqueous liquid medium (e.g. paint) may comprise 2-butoxyethanol (ethylene glycol monobutyl ether), having a boiling point of 171°C (340°F); butoxypropan-2-ol (propylene glycol n-butyl ether), having a boiling point of 171°C (340°F); 2-(2-butoxyethoxy)ethanol (diethylene glycol monobutyl ether), having a boiling point of 230°C (446°F); and combinations thereof. The aqueous liquid medium (e.g. paint) may comprise one or more of such alcohols at a total concentration of at least 5 wt-% ranging up to 10, 15, 20, or 25 wt-%.

The aqueous liquid medium (e.g. paint) may further comprise other solvents that may be characterized as "exempt" solvents, i.e. not causing the formation of ground level ozone (smog), according to environmental chemists. Representative examples include acetone, ethyl acetate, tertiary butyl acetate (TBAc), and isopropanol.

When the aqueous liquid medium (e.g. paint) comprises organic solvent, the (e.g., non-fluorinated) polymeric binder and fluorochemical material may be selected to exhibit no solubility or only trace solubility with the organic solvent(s) of the aqueous liquid medium (e.g. paint), e.g., a solubility of 0.01 grams/liter or 0.001 grams/liter or less.

Alternatively or in combination with having trace solubility the non-fluorinated polymeric binder and fluorochemical material may be selected such that it is compatible with the aqueous liquid medium (e.g. paint). The non-fluorinated polymeric binder and/or fluorochemical compound may be compatible at higher concentrations, i.e. greater than 0.01 grams/liter, or greater than 0.1 grams/liter, or greater than 0.25 grams/liter, or greater than 0.5 grams/liter. In some embodiments, the non-fluorinated polymeric binder and/or fluorochemical material may function as an additive and be present in the aqueous liquid medium (e.g. paint) at concentrations ranging from about 0.5 grams/liter to 1, 1.5, 2, 2.5 or 3 wt-% of aqueous liquid medium.

In other embodiments, the coating composition described herein can impart
ice repellency as described in U.S. Provisional Application No.: 62/247238, incorporated herein by reference.

Objects and advantages of this invention are further illustrated by the following examples, but the particular materials and amounts thereof recited in these examples, as well as other conditions and details, should not be construed to unduly limit this invention. These examples are for illustrative purposes only and are not meant to be limiting on the scope of the appended claims.

| Material designation | Description | Obtained from |
|---|---|---|
| MEK | Methyl ethyl ketone | Avantor Performance |
| MIBK | Methyl isobutyl ketone | Materials, Center Valley, PA |
| Acetone | Acetone | VWR International, Radnor, PA |
| MDI | Methylene diphenyldiisocyanate | Bayer, Germany |
| DMF | Dimethylformamide | VWR International, Radnor, PA |
| Capa 2100 | Linear polyester diol under trade designation "CAPA 2100" | Perstorp Holding AB, Malmo, Sweden |
| 1,4-butane diol | 1,4-butane diol | Sigma-Aldrich Chemical Company, St. Louis, MO |
| PS | Atactic polystyrene beads with formula weights of 800-5000 g/mol (PS₅) or 125-250 kg/mol (PS₂₅₀), | Alfa Aesar, Ward Hill, MA |
| Styron 685D | Polystyrene resin beads | American Styrenics, The Woodlands, TX |
| PMMA | Poly(methyl methacrylate) (PMMA) powder with a melting point > 150°C | Alfa Aesar, Ward Hill, MA |
| PVC | Poly(vinylchloride)with an inherent viscosity of 1.115 dL/g. | Aldrich Chemical Co., Milwaukee, WI |
| Elvacite 1010 | Acrylic resin, under trade designation "ELVACITE 1010" | Lucite International, Mississauga, Ontario, Canada |
| TPU2 | Polyurethane resin, under trade designation "ESTANE 5703" | Lubrizol Advanced Materials, Inc., Cleveland, OH |
| Unicid 350 | Long chain, linear primary carboxylic acid, under trade designation "UNICID 350" | Baker Hughes Inc., Houston, TX |

### Synthesis of Fluorochemical Material 1 (FC-1)

MEFBSE (C₄F₉SO₂N(CH₃)C₂H₄OH), a fluorochemical alcohol having an equivalent weight of 357, was made in two stages by reacting perfluorobutanesulfonyl fluoride (PBSF) with methylamine to form MEFBSA (C₄F₉SO₂N(CH₃)H), followed by reaction with ethylenechlorohydrin, using a procedure essentially as described in Example 1 of US Patent No. 2,803,656 (Ahlbrecht, et al.).

Fluorochemical 1 was then prepared using the protocol described in US Patent No. 7,396,866 (Jariwala et al.) by esterifying the MEFBSE with octadecanedioic acid at a molar ratio of 2: 1 as follows: to a three-necked round bottom flask was added 25 g (0.0793 moles) of Emerox 118 (available from Cognis Corporation, Cincinnati, Ohio), 56.7 g (0.159 moles) of MEFBSE, 100 g toluene and 1 g (0.007 moles) of 70 wt % solution of methanesulfonic acid. The contents of the flask were refluxed using a Dean-Stark trap and a condenser at 112°C for 12 h. The solution was then cooled to 80 °C. To this solution was added 1.08 g (0.007 moles) of triethanol amine and the solution was stirred at 80 °C for 1 h. This toluene solution was then washed with 75 g hot water (80 °C) three times. After the last wash the organic bottom layer was distilled to remove the toluene. The residue remaining the flask was the diester product, which was poured into ajar and allowed to crystallize on cooling to room temperature.

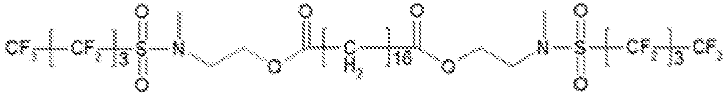

### Synthesis of Fluorochemical Material 2 (FC-2)

Fluorochemical 2 was made by the esterification of a long chain hydrocarbon acid (Unicid 350, C25 average), and MEFBSE (C₄F₉SO₂N(CH₃)C₂H₄OH) in the same manner as the synthesis Fluorochemical 1.

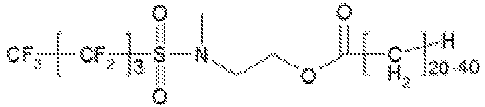

### Synthesis of Polyurethane TPU1

100 g Capa 2100 was mixed with 50.02 g MDI in a 500 mL round-bottomed flask and heated up to 70°C for 2 h. Next, 200 g of DMF and 8.11 g of 1,4-butane diol were added. The reactants were heated for an additional 3h to obtain the thermoplastic urethane polymer. The polymer mixture is approximately 44% solids in DMF. Prior to coating, the mixture was diluted to 20% solids with DMF, then further diluted to either 4 or 5% solids with MEK, as noted in the Tables, below.

### Methods

### Method for Contact Angle Measurements

Water and hexadecane contact angles were measured using a Ramé-Hart goniometer (Ramé-Hart Instrument Co., Succasunna, NJ). Advancing (*θ_{adv}*) and receding (*θ_{rec}*) angles were measured as the test liquid (e.g. water or hexadecane) was supplied *via* a syringe into or out of sessile droplets (drop volume ∼5 µL). Measurements were taken at 2 different spots on each surface, and the reported measurements are the averages of the four values for each sample (a left-side and right-side measurement for each drop).

### Preparative Examples 1-39 (PE1-PE39)

PE1-PE39 were mixed to prepare coating solutions containing polymeric binder and fluorinated additives to be used in the Examples and Comparative Examples described below.

To prepare PE1-PE39 coating solutions, 2 g of FC-1 or FC-2 powder and 48 g of solvent (one of MEK, MIBK, DMF or mixtures thereof) were added to a jar. This mixture was stirred and heated to 60°C until the solid powder dissolved and was no longer visible. This hot coating solution was mixed at the appropriate ratio with a 60°C solution of binder polymer in solvent (one of MEK, MIBK, DMF or mixtures thereof). The polymeric binder/fluorinated additive solutions were then cooled to room temperature. The compositions of coating solutions of PE1-PE39 are summarized in Table 1, below. Note: Teflon AF was purchased, not made.

**Table 1.**

| Preparative Example | Polymeric Binder | Fluorinated Additive | Polymeric Binder / Fluorinated Additive Weight Ratio | Solvent | Weight % Solids |
|---|---|---|---|---|---|
| PE1 | Styron 685D | - | 100/0 | MEK | 4 |
| PE2 | Styron 685D | FC-1 | 97.5/2.5 | MEK | 4 |
| PE3 | Styron 685D | FC-1 | 95/5 | MEK | 4 |
| PE4 | Styron 685D | FC-1 | 90/10 | MEK | 4 |
| PE5 | Styron 685D | FC-1 | 85/15 | MEK | 4 |
| PE6 | Styron 685D | FC-1 | 95/5 | MIBK | 4 |
| PE7 | PS₅ | FC-1 | 99/1 | MEK | 4 |
| PE8 | PS₅ | FC-1 | 97.5/2.5 | MEK | 4 |
| PE9 | PS₅ | FC-1 | 95/5 | MEK | 4 |
| PE10 | PS₅ | FC-1 | 90/10 | MEK | 4 |
| PE11 | PS₅ | FC-1 | 85/15 | MEK | 4 |
| PE12 | PS₂₅₀ | FC-1 | 95/5 | MEK | 4 |
| PE13 | PS₂₅₀ | FC-2 | 95/5 | MEK | 4 |
| PE14 | PMMA | FC-1 | 95/5 | MEK | 4 |
| PE15 | Elvacite 1010 | FC-1 | 95/5 | MEK | 4 |
| PE16 | PVC | FC-1 | 95/5 | MEK | 4 |
| PE17 | TPU2 | FC-1 | 95/5 | MEK | 5 |
| PE18 | Teflon® AF | - | 100/0 | 3M FC40 | 1 |
| PE19 | Comparative Binder - PS₂₅₀ | - | 100/0 | MEK | 4 |
| PE20 | Comparative Binder - PS₅ | - | 100/0 | MEK | 4 |
| PE21 | Comparative Binder - PMMA | - | 100/0 | MEK | 4 |
| PE22 | Comparative Binder - Elvacite 1010 | - | 100/0 | MEK | 4 |
| PE23 | Comparative Binder - PVC | - | 100/0 | MEK | 4 |
| PE24 | Comparative Binder - TPU2 | - | 100/0 | MEK | 4 |
| PE25 | PS₂₅₀ | FC-2 | 90/10 | MEK | 4 |
| PE26 | PS₂₅₀ | FC-2 | 85/15 | MEK | 4 |
| PE27 | - | FC-1 | 0/100 | MEK | 4 |
| PE28 | - | FC-2 | 0/100 | MEK | 4 |
| PE29 | PMMA | FC-2 | 95/5 | MEK | 4 |
| PE30 | PMMA | FC-2 | 90/10 | MEK | 4 |
| PE31 | Elvacite 1010 | FC-2 | 95/5 | MEK | 4 |
| PE32 | PVC | FC-2 | 95/5 | MEK | 4 |
| PE33 | TPU1 | FC-2 | 95/5 | MEK/DMF | 4 |
| PE34 | TPU1 | FC-1 | 95/5 | MEK/DMF | 4 |
| PE35 | TPU1 | FC-2/FC-1 | 94/3/3 | MEK/DMF | 4.5 |
| PE36 | TPU2 | - | 100/0 | MEK | 5 |
| PE37 | TPU2 | FC-1 | 97.5/2.5 | MEK | 4 |
| PE38 | TPU2 | FC-1 | 99/1 | MEK | 4 |
| PE39 | TPU2 | FC-1 | 92.5/7.5 | MEK | 4 |

### Examples 1-30 (EXI-EX30) and Comparative Examples 1-11 (CE1-CE11)

Glass microscope slides (7.5 X 5.0 cm with a thickness of 0.1 cm, obtained from Fisher) were cleaned with acetone and wiped dry with a WYPALL paper towel. The cleaned glass slides were place on a flat surface and approximately 0.5 mL of each coating composition was evenly coated onto the cleaned glass microscope slide by means of a #52 Mayer rod and dried for approximately 2 h at 21°C. This process provides a coating that is about 133 microns initially and about 5 microns after evaporation of the solvent.

CE8 was a bare PTFE sheet obtained from ePlastics (San Diego, CA) and was used as the substrate without any coating.

Water contact angles were evaluated as summarized in Table 2, below.

**Table 2.**

| Example | Preparative Example of Previous Table | Water Contact Angles in Degrees | | |
|---|---|---|---|---|
| | | θ_{adv} | θ_{rec} | CAH (θ_{adv} -θ_{rec}) |
| CE1 | PE1 | 93 | 74 | 19 |
| EX1 | PE2 | 110 | 103 | 7 |
| EX2 | PE3 | 112 | 105 | 7 |
| EX3 | PE4 | 114 | 106 | 8 |
| EX4 | PE5 | 114 | 112 | 2 |
| EX5 | PE6 | 116 | 110 | 6 |
| EX6 | PE7 | 103 | 93 | 10 |
| EX7 | PE8 | 117 | 116 | 1 |
| EX8 | PE9 | 114 | 106 | 8 |
| EX9 | PE10 | 116 | 108 | 8 |
| EX10 | PE11 | 116 | 108 | 8 |
| EX11 | PE12 | 118 | 112 | 6 |
| EX12 | PE13 | 120 | 112 | 8 |
| EX13 | PE14 | 115 | 107 | 8 |
| EX14 | PE15 | 117 | 109 | 8 |
| EX15 | PE16 | 120 | 119 | 1 |
| EX16 | PE17 | 120 | 111 | 9 |
| EX17 | PE18 | 116 | 107 | 9 |
| CE2 | PE19 | 103 | 82 | 21 |
| CE3 | PE20 | 91 | 72 | 19 |
| CE4 | PE21 | 74 | 57 | 17 |
| CE5 | PE22 | 71 | 55 | 16 |
| CE6 | PE23 | 87 | 64 | 23 |
| CE7 | PE24 | 86 | 45 | 41 |
| EX18 | PE25 | 121 | 102 | 19 |
| EX19 | PE26 | 121 | 109 | 12 |
| CE8 | PTFE Sheet | 111 | 87 | 24 |
| CE9 | PE27 | - | - | - |
| CE10 | PE28 | 136° | 87° | 49° |
| EX20 | PE29 | 119° | 111° | 8° |
| EX21 | PE30 | 121° | 115° | 6° |
| EX23 | PE31 | 119° | 114° | 5° |
| EX25 | PE32 | 121° | 117° | 4° |
| EX29 | PE33 | 120° | 114° | 6° |
| EX30 | PE35 | 119° | 112° | 7° |
| CE11 | PE36 | 67° | <20° | >47° |

The CE9 sample prepared from PE27 (neat FC-1) dried into a powder that did not continuously cover the surface of the glass microscope slide and, consequently, it was not possible to measure water contact angles.

The CE10 sample prepared from PE28 (neat FC-2) was characterized by a large hysteresis of 49°, and contacting water droplets did not readily move on the coating surface. Furthermore, the coated CE10 material was readily removed from the substrate by gentle abrasion. These results for the neat FC-1 and FC-2 demonstrate that these fluorochemical materials are not, by themselves, useful for repellent coatings. The organic polymeric binder coatings alone were also not highly repellent, as shown in CE11(PE36), which is a thermoplastic polyurethane with no fluorochemical additive (for water, a θ_{rec} of <20° and CAH of >47°).

### Examples 31-34 (EX31-EX34)

EX31-EX34 were prepared by coating PE33-PE35 and PE17 coating solutions, respectively on aluminum substrates 1 inch x 4 inches (about 2.5 cm x 10 cm) in dimension. The aluminum substrates were removed from their package, rinsed with isopropanol, and wiped dry with a WYPALL paper towel. Then the aluminum coupon substrates were dip coated at a controlled speed by lowering them into the desired coating solutions, leaving a small top portion of the substrate uncoated to clamp and hold the sample. Upon maximum immersion depth of the substrate, the coupon was raised up and out of the solution at controlled speed using a standard dip-coating procedure with a KSV NIMA dip-coater [available from Biolin Scientific]. The coated samples were dried at room temperature for a few minutes and then heated at 110°C for 15 minutes providing a coating that is about 500 nm to 1 micron after evaporation of the solvent.

Advancing and receding contact angles of droplets of water and hexadecane on the coated substrates were measured. Then, to probe the durability of the repellency of the dried coatings, the coated aluminum samples were soaked (fully submerged) overnight in deionized water in a sealed glass jar. After 24 hours, the samples were removed from the water and allowed to air dry overnight at room temperature. The advancing and receding contact angles of water and hexadecane were then measured again to look for changes and probe the durability of the coating repellency after an overnight water soak of the coating. The data are summarized in Tables 3 and 4, below.

**Table 3.**

| **Example** | **Coating Solution** | **Water θ_{adv}** | | **Water θ_{rec}** | |
|---|---|---|---|---|---|
| | | **Initial** | **After Soak** | **Initial** | **After Soak** |
| EX31 | PE33 | 123 | 106 | 93 | 71 |
| EX32 | PE34 | 122 | 124 | 110 | 96 |
| EX33 | PE35 | 125 | 119 | 108 | 91 |
| EX34 | PE17 | 121 | 115 | 115 | 106 |

**Table 4.**

| **Example** | **Coating Solution** | **Hexadecane θ_{adv}** | | **Hexadecane θ_{rec}** | |
|---|---|---|---|---|---|
| | | **Initial** | **After Soak** | **Initial** | **After Soak** |
| EX31 | PE33 | 38 | 43 | <20 | <20 |
| EX32 | PE34 | 84 | 83 | 66 | 47 |
| EX33 | PE35 | 80 | 78 | 62 | 52 |
| EX34 | PE17 | 79 | 76 | 76 | 57 |

The contact angle of the (e.g. ice, liquid) repellent surface can also be evaluated with other liquids instead of water or hexadecane, such as a solution of 10% by weight 2-n-butoxyethanol and 90% by weight deionized water. Advancing and receding contact angles of droplets of a solution of 10% by weight 2-n-butoxyethanol and 90% by weight deionized water on the coated substrates were measured. The data is summarized in Table 5.

**Table 5.**

| **Example** | **Coating Solution** | **90/10 water/butoxyethanol θ_{adv}** | **90/10 water/butoxyethanol θ_{rec}** |
|---|---|---|---|
| CE7 | PE24 | 45 | <20 |
| EX31 | PE33 | 82 | 79 |
| EX32 | PE34 | 81 | 76 |
| EX33 | PE35 | 80 | 75 |
| EX34 | PE17 | 80 | 78 |

## Claims

1. A substrate comprising a surface layer comprising a fluorochemical material and a non-fluorinated polymeric binder;wherein the fluorochemical material is a compound having the formula:
(R_{f}-L-P)ₙA
R_{f} is a fluorinated group;
L is independently an organic divalent linking group;
P is a catenary, divalent heteroatom-containing carbonyl moiety, such as -C(O)O-;
A is hydrocarbon moiety comprising 4 to 40 carbon atoms;
and n ranges from 1 to 3; and wherein the amount of the fluorochemical material is not greater than 15 wt.-% of the sum of the fluorochemical material and the non-fluorinated polymeric binder.

2. The substrate of claim 1 wherein L is the group -SO₂N(CH₃)(CH₂)ₙ- wherein n ranges from 1-4.

3. The substrate of claims 1-2 wherein R_{f} comprises less than 2% of fluorinated groups having greater than 6 carbon atoms.

4. The substrate of claims 1-3 wherein R_{f} comprises less than 25% of fluorinated groups having greater than 4 carbon atoms.

5. The substrate of claims 1-4 wherein R_{f} is CF₃[CF₂]₃- for at least 50 wt.-% of the fluorochemical material.

6. The substrate of claims 1-5 wherein the hydrocarbon moiety is a saturated alkylene moiety.

7. The substrate of claims 1-6 wherein the fluorochemical material has a fluorine content of at least 25 wt-%.

8. The substrate of claims 1-7 wherein n of the formula of claim 2 averages at least 2.

9. The substrate of claims 1-8 wherein the non-fluorinated polymeric binder is selected from polystyrene, acrylic, polyester, polyurethane, polyolefin, and polyvinyl chloride.

10. The substrate of claims 1-9 wherein the fluorochemical material does not form a covalent bond with the non-fluorinated polymeric binder.

11. The substrate of claims 1-10 wherein the surface layer is liquid repellent such that the receding contact angle of the surface layer with water ranges from 100 degrees to 135 degrees and the receding contact angle with hexadecane is at least 60 degrees.

12. The substrate of claims 1-11 wherein the fluorochemical material is not a fluoroalkyl silsesquioxane.

13. A coating composition comprising:
an organic solvent;
a non-fluorinated polymeric binder; and
a fluorochemical material wherein the fluorochemical material is a compound having the formula:
(R_{f}-L-P)ₙA
R_{f} is a fluorinated group;
L is independently an organic divalent linking group;
P is a catenary, divalent heteroatom-containing carbonyl moiety, such as -C(O)O-;
A is hydrocarbon moiety comprising 4 to 40 carbon atoms;
and n ranges from 1 to 3; and wherein the amount of the fluorochemical material is not greater than 15 wt.-% of the sum of the fluorochemical material and the non-fluorinated polymeric binder.

14. The substrate of claims 1-12 or the coating of claim 13 wherein the repellent surface or coating is free of fluoroalkyl groups with 8 or more carbon atoms.

15. The substrate claims 1-12 and 14 or the coating of claim 13 wherein the repellent surface or coating exhibits a receding contact angle with a solution containing 10% by weight of 2-n-butoxyethanol and 90% by weight deionized water is at least 45 degrees.

## Patentansprüche

1. Ein Substrat mit einer Oberflächenschicht, die ein fluorchemisches Material und ein nicht-fluoriertes, polymeres Bindemittel umfasst; wobei das fluorchemische Material eine Verbindung folgender Formel ist:
(R_{f}-L-P)ₙA
wobei R_{f} eine fluorierte Gruppe ist;
L unabhängig eine organische, zweiwertige Bindungsgruppe ist;
P ein katenärer, zweiwertiger, Heteroatom enthaltender Carbonylrest wie -C(O)O- ist;
A ein Kohlenwasserstoffrest ist, die 4 bis 40 Kohlenstoffatome umfasst;
und n im Bereich von 1 bis 3 liegt; und wobei die Menge des fluorchemischen Materials nicht größer als 15 Gew.-% der Summe des fluorchemischen Materials und des nicht-fluorierten, polymeren Bindemittels ist.

2. Das Substrat nach Anspruch 1, wobei L die Gruppe -SO₂N(CH₃)(CH₂)ₙ- ist, wobei n im Bereich von 1-4 liegt.

3. Das Substrat nach einem der Ansprüche 1-2, wobei R_{f} weniger als 2 % fluorierte Gruppen mit mehr als 6 Kohlenstoffatomen umfasst.

4. Das Substrat nach einem der Ansprüche 1-3, wobei R_{f} weniger als 25 % fluorierte Gruppen mit mehr als 4 Kohlenstoffatomen umfasst.

5. Das Substrat nach einem der Ansprüche 1-4, wobei R_{f} für mindestens 50 Gew.-% des fluorchemischen Materials CF₃[CF₂]₃ ist.

6. Das Substrat nach einem der Ansprüche 1-5, wobei der Kohlenwasserstoffrest ein gesättigter Alkylenrest ist.

7. Das Substrat nach einem Ansprüche 1-6, wobei das fluorchemische Material einen Fluorgehalt von mindestens 25 Gew.-% aufweist.

8. Das Substrat nach einem der Ansprüche 1-7, wobei n der Formel von Anspruch 2 durchschnittlich mindestens 2 ist.

9. Das Substrat nach Anspruch 1-8, wobei das nicht-fluorierte, polymere Bindemittel aus Polystyrol, Acryl, Polyester, Polyurethan, Polyolefin und Polyvinylchlorid ausgewählt ist.

10. Das Substrat nach Anspruch 1-9, wobei das fluorchemische Material keine kovalente Bindung mit dem nicht-fluorierten, polymeren Bindemittel bildet.

11. Das Substrat nach Anspruch 1-10, wobei die Oberflächenschicht flüssigkeitsabweisend ist, so dass der Rückzugskontaktwinkel der Oberflächenschicht mit Wasser im Bereich von 100 Grad bis 135 Grad und der Rückzugskontaktwinkel mit Hexadecan mindestens 60 Grad beträgt.

12. Das Substrat nach Anspruch 1-11, wobei das fluorchemische Material kein Fluoralkyl-Silsesquioxan ist.

13. Eine Beschichtungszusammensetzung, umfassend:
ein organisches Lösungsmittel;
ein nicht-fluoriertes, polymeres Bindemittel; und
ein fluorchemisches Material, wobei das fluorchemische Material eine Verbindung folgender Formel ist:
(R_{f}-L-P)ₙA
wobei R_{f} eine fluorierte Gruppe ist;
L unabhängig eine organische zweiwertige Bindungsgruppe ist;
P ein katenärer, zweiwertiger, Heteroatom enthaltender Carbonylrest wie -C(O)O- ist;
A ein Kohlenwasserstoffrest ist, die 4 bis 40 Kohlenstoffatome umfasst;
und n im Bereich von 1 bis 3 liegt; und wobei die Menge des fluorchemischen Materials nicht größer als 15 Gew.-% der Summe des fluorchemischen Materials und des nicht-fluorierten, polymeren Bindemittels ist.

14. Das Substrat nach Anspruch 1-12 oder die Beschichtung nach Anspruch 13, wobei die abweisende Oberfläche oder Beschichtung frei von Fluoralkylgruppen mit 8 oder mehr Kohlenstoffatomen ist.

15. Das Substrat nach einem der Ansprüche 1-12 und 14 oder Beschichtung nach Anspruch 13, wobei die abweisende Oberfläche oder Beschichtung einen Rückzugskontaktwinkel mit einer Lösung, die zu 10 Gew.-% 2-n-Butoxyethanol und zu 90 Gew.-% entionisiertes Wasser enthält, von mindestens 45 Grad aufweist.

## Revendications

1. Substrat comprenant une couche de surface comprenant un matériau fluorochimique et un liant polymère non fluoré ; dans lequel le matériau fluorochimique est un composé ayant la formule :
(R_{f}-L-P)ₙA
R_{f} est un groupe fluoré ;
L est indépendamment un groupe de liaison organique divalent ;
P est un fragment carbonylé contenant de l'hétéroatome divalent caténaire, tel que -C(O)O- ;
A est un fragment d'hydrocarbure comprenant de 4 à 40 atomes de carbone ;
et n va de 1 à 3 ; et dans lequel la quantité du matériau fluorochimique n'est pas supérieure à 15 % en poids de la somme du matériau fluorochimique et du liant polymère non fluoré.

2. Substrat selon la revendication 1 dans lequel L est le groupe -SO₂N(CH₃)(CH₂)ₙ- dans lequel n va de 1 à 4.

3. Substrat selon les revendications 1 et 2 dans lequel R_{f} comprend moins de 2 % de groupes fluorés ayant plus de 6 atomes de carbone.

4. Substrat selon les revendications 1 à 3 dans lequel R_{f} comprend moins de 25 % de groupes fluorés ayant plus de 4 atomes de carbone.

5. Substrat selon les revendications 1 à 4 dans lequel R_{f} est CF₃[CF₂]₃- pour au moins 50 % en poids du matériau fluorochimique.

6. Substrat selon les revendications 1 à 5 dans lequel le fragment d'hydrocarbure est un fragment d'alkylène saturé.

7. Substrat selon les revendications 1 à 6 dans lequel le matériau fluorochimique a une teneur en fluor d'au moins 25 % en poids.

8. Substrat selon les revendications 1 à 7 dans lequel n de la formule selon la revendication 2 est en moyenne d'au moins 2.

9. Substrat selon les revendications 1 à 8 dans lequel le liant polymère non fluoré est choisi parmi polystyrène, acrylique, polyester, polyuréthane, polyoléfine, et chlorure de polyvinyle.

10. Substrat selon les revendications 1 à 9 dans lequel le matériau fluorochimique ne forme pas une liaison covalente avec le liant polymère non fluoré.

11. Substrat selon les revendications 1 à 10 dans lequel la couche de surface est hydrophobe de telle sorte que l'angle de contact sortant de la couche de surface avec l'eau varie de 100 degrés à 135 degrés et l'angle de contact sortant avec l'hexadécane est d'au moins 60 degrés.

12. Substrat selon les revendications 1 à 11 dans lequel le matériau fluorochimique n'est pas un silsesquioxane fluoroalkyle.

13. Composition de revêtement comprenant :
un solvant organique ;
un liant polymère non fluoré ; et
un matériau fluorochimique dans lequel le matériau fluorochimique est un composé ayant la formule :
(R_{f}-L-P)ₙA
R_{f} est un groupe fluoré ;
L est indépendamment un groupe de liaison organique divalent ;
P est un fragment carbonylé contenant de l'hétéroatome divalent caténaire, tel que -C(O)O- ;
A est un fragment d'hydrocarbure comprenant de 4 à 40 atomes de carbone ;
et n va de 1 à 3 ; et dans lequel la quantité du matériau fluorochimique n'est pas supérieure à 15 % en poids de la somme du matériau fluorochimique et du liant polymère non fluoré.

14. Substrat selon les revendications 1 à 12 ou revêtement selon la revendication 13 dans lequel la surface ou le revêtement répulsif est exempt de groupes fluoroalkyles avec 8 atomes de carbone ou plus.

15. Substrat les revendications 1 à 12 et 14 ou revêtement selon la revendication 13 dans lequel la surface ou le revêtement répulsif présente un angle de contact sortant avec une solution contenant 10 % en poids de 2-n-butoxyéthanol et 90 % en poids d'eau désionisée est d'au moins 45 degrés.
